# EUROPEAN PATENT SPECIFICATION

(11) **EP 2 602 101 B1**
(45) Date of publication and mention of the grant of the patent: **11.04.2018**
(21) Application number: 11814645.5
(22) Date of filing: 02.08.2011
(51) Int. Cl.: B29D 30/58, B60C 5/01, B60C 11/02, B60C 11/13

(54) **TIRE PRODUCTION METHOD AND TIRE**
REIFENHERSTELLUNGSVERFAHREN UND REIFEN
PROCÉDÉ DE CONFECTION DE PNEUMATIQUES ET PNEUMATIQUE

(30) Priority: 14.09.2010 JP 2010205904; 19.08.2010 JP 2010184262; 06.08.2010 JP 2010177640
(43) Date of publication of application: 12.06.2013
(73) Proprietor: Bridgestone Corporation, Tokyo 104-8340 (JP)
(72) Inventor: KOUNO, Yoshihide, Tokyo 104-8340 (JP); KON, Seiji, Tokyo 104-8340 (JP); HASEGAWA, Keiichi, Tokyo 104-8340 (JP)
(74) Representative: Lamb, Martin John Carstairs
(86) International application number: PCT/JP2011/067688
(87) International publication number: WO 2012/018020

(56) References cited:
- WO-A1-2010/053478
- JP-A- 5 155 202
- JP-A- 8 300 910
- JP-A- H03 164 302
- JP-A- H07 186 620
- JP-A- S50 111 704
- JP-A- 2003 236 949
- JP-A- 2007 313 836
- JP-A- 2007 320 044
- JP-B1- S4 713 921
- US-A- 4 287 324
- US-A- 4 934 426

## Description

### Technical Field

The present invention relates to a tire manufacturing method, a tread member and a tire.

### Background Art

In rim mounted tires, a structure has been disclosed wherein a tire main body is configured from a pair of half-ring shaped tire pieces, the tire pieces each including a single bead within which a bead core is embedded, a side wall that continues from the bead, and a protruding strip that continues from the side wall. The tire pieces are integrally molded from a polymer material, and the protruding strips are joined together to form a tread bottom portion. At least one reinforcement layer of reinforcement cord that is wound onto a tire radial direction outer face of the tread bottom portion of the tire main body in a spiral pattern continuous in the tire circumferential direction, and a tread rubber that is applied to the outside of the reinforcement layer, are integrated together by vulcanizing in a vulcanization mold (see Patent Document 1). Attention is also drawn to the disclosures of JP47-13921, WO 2010/053478 A1, US4,934,426, JP2003-236949 and JPH07-186620.

Patent Document 1: Japanese Patent Application Laid-Open (JP-A) No. 3-143701

### DISCLOSURE OF INVENTION

### Technical Problem

In the related example described above, the bottom portions of the grooves have a high rigidity when the gauge at bottom portions of grooves in a tread member is relatively thick, and consequently air between the tread member and the tire main body can be squeezed out to the exterior when the tread member is integrated with the tire main body,.

However, having a thick gauge for the groove bottom portions of the tread member increases the volume of the tread member, which is disadvantageous from the perspective of rolling resistance. The groove bottom portions have a low rigidity and readily deform when the gauge of the groove bottom portions of the tread member is made thin, such that it is conceivable that some air could easily be left behind between the tread member and the tire frame member when adhering the tread member to a tire frame member, concentrated at the positions of the groove bottom portions.

In consideration of the above circumstances, an object of the present invention is to decrease the volume of a tread member and decrease rolling resistance whilst raising the adhesiveness between a tread member and a tire frame member.

### Solution to Problem

A first aspect (tire manufacturing method according to independent claim 1) of the present invention comprises:
forming a tire frame member using a resin material; disposing a tread member at a tire radial direction outside of the tire frame member, the tread member formed with a groove on a ground contact face side of the tread member and with a plurality of air holes formed at a bottom portion of the groove, arranged in a tire width direction and penetrating through to the opposite side of the tread member from the ground contact face; and disposing an adhesion member between an outer peripheral face of the tire frame member and the tread member, and adhering the tread member to the tire frame member, thereby the adhesion member enters and hardens in the air holes and blocks off the air holes.

In the tire manufacturing method according to the first aspect, the air holes are formed at the bottom portion of the groove of the tread member and penetrating through to the opposite side of the tread member from the ground contact face. Accordingly, air between the tread member and the tire frame member can be smoothly expelled into the groove through the air holes when the tread portion is being adhered to the tire frame member. This is particularly effective when the gauge of the bottom portion of the groove is made thin in order to reduce the volume of the tread member. The volume of the tread member can accordingly be reduced and rolling resistance decreased whilst the adhesiveness between the tread member and the tire frame member can be raised.

A second aspect (tire manufacturing method) of the present invention is the tire manufacturing method according to the first aspect wherein the air holes are formed during molding of the tread member.

In the tire manufacturing method according to the second aspect, an increase in the number of processes can be suppressed due to forming the air holes to the bottom portion of the groove during molding of the tread member.

A third aspect (tire manufacturing method) of the present invention is the tire manufacturing method according to either the first aspect or the second aspect wherein the air holes are bored after the tread member has been molded and before adhering the tread member to the tire frame member.

According to the tire manufacturing method of the third aspect, due to boring the air holes of a groove wall after the tread member has been molded and before adhering the tread member to the tire frame member, variables such as the position, number and size of the air holes can be set as desired. The tread member can accordingly be manufactured with various configurations of the air holes at low cost.

A fourth aspect tire according to independent claim 5) of the present invention includes: a tire frame member formed using a resin material; a tread member that is disposed at a tire radial direction outside of the tire frame member and that is formed with a groove on a ground contact face side and with a plurality of air holes formed at a bottom portion of the groove and arranged in a tire width direction; and an adhesion member that is disposed between an outer peripheral face of the tire frame member and the tread member, that adheres the tread member and the tire frame member together, and that blocks off the air holes of the tread member.

In the tire according to the fourth aspect, the tread member formed with the air holes at the bottom portion of the groove is adhered to the outer peripheral face of the tire frame member by the adhesion member, and the air holes are blocked off by the adhesion member. Accordingly, air does not remain between the tread member and the tire frame member at the position of the bottom portion of the groove. This is the case even when the volume of the tread member is small and the gauge at the bottom portion of the groove is thin.
Accordingly, the adhesiveness between the tread member and the tire frame member can be raised whilst reducing the volume of the tread member and decreasing the rolling resistance of the tire decreased.

A fifth aspect (tire) of the present invention is the tire according to the fourth aspect wherein: the tire frame member includes at both tire width direction sides a bead portion that configures a fitting portion to a rim, and a side portion that is contiguous to the bead portion; a first reinforcement portion is provided at an inner face of the tire frame member, the first reinforcement portion being disposed in a fitted state of the bead portion to the rim so as to include an inner face side at a position that contacts a tire width direction outermost portion of a rim flange of the rim when the side portion is deformed along the rim flange so as to tilt towards a tire width direction outside; and a second reinforcement portion is provided at the inner face of the tire frame member and the second reinforcement portion being disposed so as to include a position at the tire radial direction outside of the first reinforcement portion.

In the tire according to the fifth aspect, excessive deformation of the side portion is suppressed since the first reinforcement portion and the second reinforcement portion mutually support each other between a protruding object and the tire width direction outermost portion of the rim flange even if the side portion of the resin material formed tire frame member attempts large deformation when riding over the protruding object on the road surface. Excessive deformation of the side portion when riding over the protruding object on the road surface can accordingly be suppressed without making the gauge of the side portion uniformly thick.

A sixth aspect (tire) of the present invention is the tire according to the fifth aspect wherein: the first reinforcement portion is disposed to the tire radial direction inside of a maximum width position of the tire frame member; and the second reinforcement portion is disposed to the tire radial direction outside of the maximum width position and at a separation from the first reinforcement portion.

In the tire according to the sixth aspect, resilience of the side portion can be secured and contact between the first reinforcement portion and the second reinforcement portion during normal running can be suppressed due to setting the positions of the first reinforcement portion and the second reinforcement portion appropriately. Good ride comfort can accordingly be secured.

An seventh aspect (tire) of the present invention is the tire according to either the fifth aspect or the sixth aspect wherein the first reinforcement portion and/or the second reinforcement portion are/is integrally molded to the tire frame member.

In the tire according to the seventh aspect, an increase in manufacturing costs can be suppressed due to integrally molding the first reinforcement portion and/or the second reinforcement portion to the tire frame member.

A eighth aspect (tire) of the present invention is the tire according to either the fifth aspect or the sixth aspect wherein the first reinforcement portion and/or the second reinforcement portion are/is adhered to the inner face of the tire frame member.

In the tire according to the eighth aspect, the specifications of the first reinforcement portion and/or the second reinforcement portion may be selected as appropriate according to the specifications of the tire whilst using a common tire frame member. An increase in the types of mold employed in molding the tire frame member can accordingly be suppressed, and manufacturing costs can be suppressed.

A ninth aspect (tire) of the present invention is the tire according to the fourth aspect wherein: the tire frame member is formed in a toroidal shape so as to span between a pair of bead portions; and the tire further includes a covering layer provided so as to cover an outside portion of the tire frame member.

In the tire according to the ninth aspect, external damage to tire outside portions of the tire frame member made from a resin material, caused by for example curb contact, can be suppressed due to providing the covering layer to the outside portion of the tire frame member that is made from a resin material.
Moreover the resin material of the tire frame member is covered by the covering layer and not exposed to the outside. Deterioration of the resin material due to for example sunlight or water from outside the tire can accordingly be suppressed, raising the weather resistance of tire outside portions of the tire frame member.

An tenth aspect (tire) of the present invention is the tire according to the ninth aspect wherein the covering layer is configured from vulcanized rubber.

In the tire according to the tenth aspect, the covering layer is configured from vulcanized rubber. Resistance to external damage and weather resistance equivalent to that of related general rubber pneumatic tires can accordingly be obtained for tire outside portions. Note that the rubber employed for the covering layer is preferably a similar rubber to the rubber used for outside faces of side walls and bead portions of related general rubber pneumatic tires.

A eleventh aspect (tire) of the present invention is the tire according to the tenth aspect including a tread layer made from vulcanized rubber and provided at an outer peripheral face of the tire frame member.

In the tire according to the eleventh aspect, the outer peripheral face of the tire frame member is covered by the tread layer made from vulcanized rubber, and the outside faces (tire sides) of the tire frame member are covered by the covering layer made from vulcanized rubber. The entire tire outer face of the tire frame member is accordingly covered by vulcanized rubber, and deterioration of the resin material due to for example sunlight or water from outside the tire can be suppressed. The outer faces (the outer peripheral face and the outside faces) of the tire frame member can accordingly obtain equivalent weather resistance characteristics to those of related general rubber pneumatic tires.
Note that the rubber used for the tread layer has at least superior abrasion resistance characteristics to the resin material employed for the tire frame member.

A twelfth aspect (tire) of the present invention is the tire according to the eleventh aspect wherein the tread layer and the covering layer are integrally formed to each other.

In the tire according to the twelfth aspect, the covering layer made from vulcanized rubber and the tread layer made from vulcanized rubber are integrally formed to each other. There are accordingly no joints between the covering layer and the tire frame member, so issues with joints coming apart after prolonged use, for example, fundamentally do not occur, enabling an increase in durability. Moreover, since the entire outer face of the tire is covered with vulcanized rubber, a similar quality of appearance can be obtained to that of related general rubber pneumatic tires.

A thirteenth aspect (tire) of the present invention is the tire according to any one of the tenth aspect to the twelfth aspect wherein the covering layer extends continuously from an outside face to an inside face of bead portions of the tire frame member.

In the tire according to the thirteenth aspect, the covering layer made from vulcanized rubber is extended continuously from the outside faces to the inside faces of the bead portions. The covering layer made from vulcanized rubber can accordingly be made to contact a rim, and sealing characteristics between the bead portions and the rim similar to those of related general rubber pneumatic tires can be secured.

A fourteenth aspect (tire) of the present invention is the tire according to either the eleventh aspect or the twelfth aspect wherein the tread layer and the covering layer are configured from different types of rubber.

In the tire according to the fourteenth aspect, the tread layer and the covering layer are configured from different types of rubber. It is accordingly possible to employ an appropriate rubber for the tread layer in the tread layer, and to employ an appropriate rubber for tire outside portions in the covering layer.
For example, for the tread layer rubber, a rubber can be employed that at least has superior abrasion resistance characteristics to the rubber of the covering layer, and a rubber can be employed for the covering layer rubber that has superior resistance to external damage (preferably in which cracks do not start readily and cracks do not progress readily even if they do start) and superior weather resistance to those of the tread layer rubber.

A fifteenth aspect (tire) of the present invention is the tire according to any one of the ninth aspect to the fourteenth aspect wherein the covering layer includes cord layers or fiber layers.

In the tire according to the fifteenth aspect, resistance to external damage of tire outside portions can accordingly be further increased due to including the cord layers or the fiber layers in the covering layer.

### Advantageous Effects of Invention

As explained above, the tire manufacturing method of the first aspect of the present invention exhibits the excellent advantageous effect whereby the adhesiveness between the tread member and the tire frame member can be raised whilst reducing the volume of the tread member and the decreasing the rolling resistance.

The tire manufacturing method according to the second aspect exhibits the excellent advantageous effect whereby an increase in the number of processes can be suppressed.

The tire manufacturing method according to the third aspect exhibits the excellent advantageous effect whereby the tread member can be manufactured with various configurations of the air holes at low cost.

The tire according to the fourth aspect exhibits the excellent advantageous effect whereby the adhesiveness between the tread member and the tire frame member can be raised whilst reducing the volume of the tread member and decreasing the rolling resistance.

The tire according to the fifth aspect exhibits the excellent advantageous effect whereby pinch cuts accompanying excessive deformation of the side portion when riding over a protruding object on the road surface can be suppressed without making the gauge of the side portion uniformly thick.

The tire according to the sixth aspect exhibits the excellent advantageous effect whereby good ride comfort can be secured.

The tire according to the seventh aspect exhibits the excellent advantageous effect whereby an increase in manufacturing costs can be suppressed.

The tire according to the eighth aspect exhibits the excellent advantageous effect whereby an increase in the types of mold employed in molding the tire frame member can be suppressed, and manufacturing costs can be suppressed.

The tire according to the ninth aspect exhibits the excellent advantageous effect whereby the durability of outside portions of the tire can be increased.

The tire according to the tenth aspect exhibits the excellent advantageous effect whereby resistance to external damage and weather resistance equivalent to that of related general rubber pneumatic tires can be obtained for tire outside portions.

The tire according to the eleventh aspect exhibits the excellent advantageous effect whereby the outer faces of the tire (the outside faces and the outer peripheral face) can obtain equivalent weather resistance characteristics to those of related general rubber pneumatic tires.

The tire according to the twelfth aspect exhibits the excellent advantageous effects whereby high durability can be obtained, and a similar quality of appearance can be obtained to that of related general rubber pneumatic tires.

The tire according to the thirteenth aspect exhibits the excellent advantageous effect whereby sealing characteristics between the bead portions and the rim can be secured.

The tire according to the fourteenth aspect exhibits the excellent advantageous effect whereby in the tread layer and at tire outside portions, the properties of the rubber materials at each of these locations can be exhibited to good effect, and similar performance can be obtained to that of related rubber pneumatic tires in the tread layer and at the tire outside portions.

The tire according to the fifteenth aspect exhibits the excellent advantageous effect whereby resistance to external damage of the tire outside portions can be further increased.

### BRIEF DESCRIPTION OF DRAWINGS

Fig. 1 to Fig. 4 relate to a first exemplary embodiment. Fig. 1 is a plan view illustrating a tread member.
Fig. 2 is a cross-section illustrating a temporary assembly during manufacture of a tire.
Fig. 3 is an enlarged cross-section corresponding to arrow 3-3 in Fig. 1 and illustrating a state in which a tread member is being vulcanization-adhered to a tire frame member.
Fig. 4 is a cross-section illustrating a state in which air holes have been blocked-off by an adhesion member.
Fig. 5 to Fig. 7 relate to a second exemplary embodiment. Fig. 5 is a cross-section illustrating a tire that has been assembled to a rim.
Fig. 6 is an enlarged partial cross-section illustrating a positional relationship between a first reinforcement portion and a second reinforcement portion in a tire that has been assembled to a rim.
Fig. 7 is an enlarged cross-section illustrating a state in which a first reinforcement portion and a second reinforcement portion are mutually supporting each other between a protruding object and a tire width direction outermost portion of a rim flange when a tire runs over a protruding object on a road surface.
Fig. 8 to Fig. 13 relate to a third exemplary embodiment. Fig. 8 is a perspective view including a partial cross-section illustrating an overall configuration of a tire.
Fig. 9 is an exploded perspective view illustrating a tire.
Fig. 10 is a perspective view illustrating a temporary assembly covered by an envelope.
Fig. 11 is a cross-section illustrating an example of a temporary assembly.
Fig. 12 is a cross-section schematically illustrating an example of temporary assemblies supported by a support member of a trolley disposed inside a vulcanization container.
Fig. 13 is a cross-section illustrating another example of a temporary assembly.

### DESCRIPTION OF EMBODIMENTS

Explanation follows regarding exemplary embodiments of the present invention with reference to the drawings.

### First Exemplary Embodiment

### Tread Member

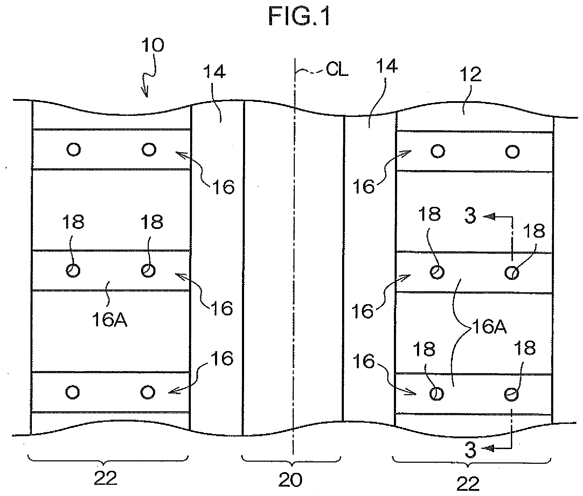

Fig. 1 shows a tread member 10 according to the present exemplary embodiment that is a Pre-Cured Tread (PCT) configured from for example rubber. The rubber employed is for example styrene-butadiene rubber (SBR).

A tread pattern is formed to a ground contact face 12 side of the tread member 10 including, as examples of grooves, circumferential direction main grooves 14 and lateral main grooves 16. The tread pattern may be formed by vulcanizing unvulcanized rubber in a PCT mold to form the tread member 10.

When disposing the tread member 10 at the outer periphery of a tire frame member 24, the tread member 10 may be belt shaped and wound on in a circular ring shape, or the tread member 10 may be pre-formed in a circular ring shape and temporarily increased in diameter and fitted over an outer peripheral face 24A of the tire frame member 24.

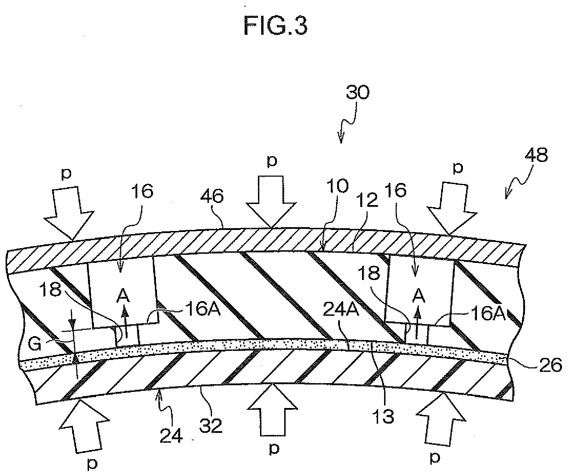

Air holes 18 are formed to bottom portions 16A of the lateral main grooves 16, penetrating through to an opposite side of the tread member 10 from the ground contact face 12 (an inner peripheral face 13 in Fig. 3). The circumferential direction main grooves 14 are formed for example one on both tire width direction sides of a tire equatorial plane CL to give a total of two circumferential direction main grooves 14. A center land portion row 20 is formed between the two circumferential direction main grooves 14. Shoulder land portion rows 22 are respectively formed to the tire width direction outsides of each of the circumferential direction main grooves 14. The lateral main grooves 16 are for example formed in the shoulder land portion rows 22. When three or more circumferential direction main grooves are formed, the tire width direction outsides of the tire width direction outermost circumferential direction main grooves configure the shoulder land portion rows 22.

The air holes 18 are formed with for example circular shapes from the perspective of suppressing the air holes 18 from acting as crack start points. The air holes 18 have a diameter of between 20% and 300% of a gauge G (Fig. 3) of the bottom portions 16A of the lateral main grooves 16. The lower limit of this value range is 20% since below this value it becomes difficult to expel air between the tire frame member 24 and the tread member 10 through the air holes 18 when adhering the tread member 10 to the outer peripheral face 24A of the tire frame member 24 (Fig. 3). The upper limit of this value range is set at 300% since above this value there is a concern about the occurrence of cracks starting at the air holes 18. By way of an example, when the gauge G of the bottom portions 16A of the lateral main grooves 16 is 1mm, a diameter of about 1mm is desirable for the air holes 18.

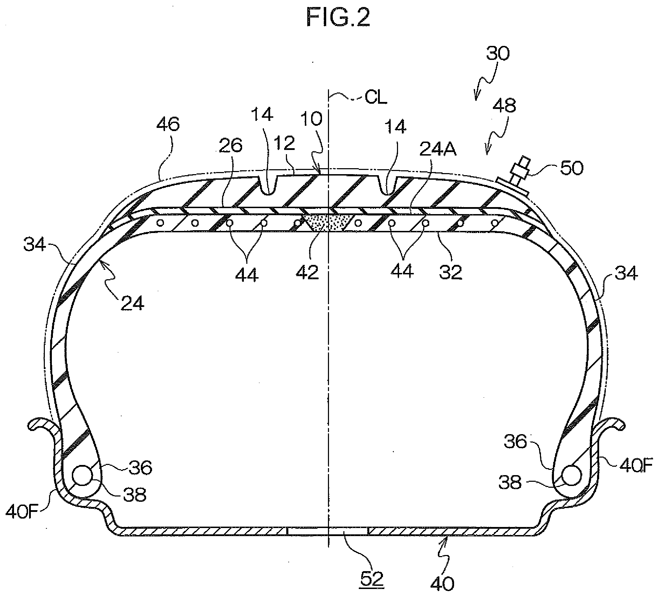

The air holes 18 are formed during molding of the tread member 10, or are bored after the tread member 10 has been molded and before the tread member 10 is adhered to the tire frame member 24 (Fig. 2, Fig. 3). An increase in the number of operations can be suppressed when the air holes 18 are formed during molding of the tread member 10. When the air holes 18 are bored after the tread member 10 has been molded and before the tread member 10 is adhered to the tire frame member 24, variables such as the position, number and size of the air holes 18 can be set as desired, and the tread member 10 can be manufactured with various air holes 18 at low cost.

The shape of air holes 18 may be a shape other than a circular shape provided that it is a shape that does not readily act as a starting point for cracks. The number and positions of the air holes 18 may be set as desired, and the air holes 18 may be formed to the circumferential direction main grooves 14.

### Tire Manufacturing Method

Fig. 2 and Fig. 3 illustrate a tire manufacturing method according to the present exemplary embodiment wherein: the tire frame member 24 is formed using a resin material; the tread member 10 is disposed at a tire radial direction outside of the tire frame member 24, and the tread member is formed with the circumferential direction main grooves 14 and the lateral main grooves 16 as examples of grooves on the ground contact face 12 side, and the air holes 18 are formed to the bottom portions 16A of the lateral main grooves 16 and penetrate through to the opposite side of the tread member 10 from the ground contact face 12; and an adhesion member 26 is disposed between the outer peripheral face 24A of the tire frame member 24 and the tread member 10, adhering the tread member 10 to the tire frame member 24.

The air holes 18 are formed during molding of the tread member 10, or are bored after the tread member 10 has been molded and before the tread member 10 is adhered to the tire frame member 24 (Fig. 2). Note that some air holes 18 may also be formed during molding of the tread member 10, with extra air holes 18 bored before adhering the tread member 10 to the tire frame member 24 (Fig. 2).

Fig. 3 shows the tire frame member 24 molded employing a thermoplastic material as an example of a resin material so as to give a shape corresponding to for example a crown portion 32 of a tire 30, shapes corresponding to side portions 34 that respectively continue towards the tire radial direction inside from both tire axial direction sides of the crown portion 32, and shapes corresponding to bead portions 36 that continue towards the tire radial direction insides of the side portions 34. Bead cores 38 are embedded in the bead portions 36. Examples of the material employed for the bead cores 38 include metal, organic fibers, resin-covered organic fibers, or a hard resin. Note that the bead cores 38 may be omitted provided that rigidity of the bead portions 36 can be secured, and provided that there are no issues regarding fitting to a rim (not shown in the drawings).

A thermoplastic resin with resilience similar to rubber or a thermoplastic elastomer (TPE), for example, may be employed for the thermoplastic material. However a thermoplastic elastomer is preferably employed from the perspectives of resilience during running and molding characteristics during manufacture.

Examples of thermoplastic elastomers include, for example, amide thermoplastic elastomers (TPA), ester thermoplastic elastomers (TPC), olefin thermoplastic elastomers (TPO), styrene thermoplastic elastomers (TPS), urethane thermoplastic elastomers (TPU), thermoplastic cross-linked rubber (TPV) or other thermoplastic elastomers (TPZ), as defined in JIS K6418.

Examples of thermoplastic resins include, for example, urethane resins, olefin resins, vinyl chloride resins or polyamide resins.

Further examples of materials that can be employed as such thermoplastic materials include materials with a deflection temperature under load (during loading at 0.45MPa) of 78 °C or greater as defined by ISO75-2 or ASTM D648, tensile yield strength of 10MPa or greater as defined by JIS K7113, tensile yield elongation of 10% or greater as similarly defined by JIS K7113, tensile break point elongation of 50% or greater as similarly defined by JIS K7113, and a Vicat softening temperature (method A) of 130 °C or greater as defined by JIS K7206.

The tire frame member 24 is for example first molded in tire-half shapes about a tire width direction central portion, namely the tire equatorial plane CL or a plane in the vicinity thereof of the tire 30 by employing a method such as injection molding, and then joining the tire-half shapes together at edge portions of the crown portion 32 to configure the tire frame member 24. A joining member 42 of for example a thermoplastic material of either the same or a different type, or an adhesive, is employed for joining together the edge portions of the crown portion 32.

A cord 44 for reinforcement is wound onto the crown portion 32 in for example a spiral pattern. The cord 44 may employ for example steel cord, a monofilament (single strand) of for example metal fiber or organic fiber, or a multifilament (twisted strands) of such fibers that have been twisted. When steel cord is employed for the cord 44, a sheet (not shown in the drawings) of a thermoplastic material may be affixed for example to the tire radial direction outside of the crown portion 32, and the cord 44 spirally wound onto and embedded in the sheet along the tire circumferential direction whilst heating the cord 44. Both the cord 44 and the sheet may be heated when this is being performed.

Winding the cord 44 onto the crown portion 32 in a tire circumferential direction spiral raises the tire circumferential direction rigidity of the crown portion 32, and enables the damage resistance of the crown portion 32 to be raised. The puncture resistance of the crown portion 32 of the tire 30 can also be raised thereby. Note that when reinforcing the crown portion 32, the cord 44 is preferably wound in a tire circumferential direction spiral pattern from the perspective of ease of manufacture, however the cord 44 may be discontinuous in the tire width direction. The tire frame member 24 may also be further reinforced by disposing another reinforcement material (polymer material or metal fibers, cord, non-woven cloth or woven cloth) embedded in the tire frame member 24 (for example in the bead portions 36, the side portions 34, or the crown portion 32).

The adhesion member 26 is for example unvulcanized rubber that can adhere the tread member 10 to the outer peripheral face 24A of the tire frame member 24 by vulcanization bonding. The adhesion member 26 is disposed in advance to at least one of the outer peripheral face 24A of the tire frame member 24 and/or the inner peripheral face 13 of the tread member 10 (the face on the opposite side from the ground contact face 12). Note that preferably a rough portion (not shown in the drawings) is provided in advance to the outer peripheral face 24A of the tire frame member 24 and/or the inner peripheral face 13 of the tread member 10 such that the adhesion member 26 keys into the rough portion during adhesion of the outer peripheral face 24A and the tread member 10.

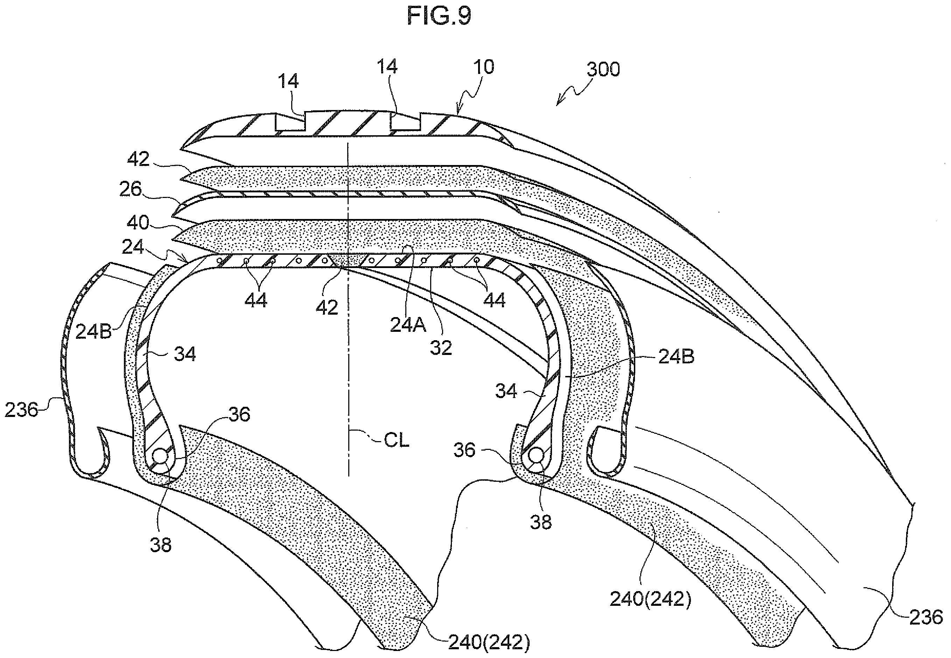

In order to dispose the adhesion member 26 on the outer peripheral face 24A of the tire frame member 24, preferably for example one layer or two layers of another adhesive (see an adhesive 240 illustrated in Fig. 9) are coated on the outer peripheral face 24A. Similarly, in order to dispose the adhesion member 26 on the inner peripheral face 13 of the tread member 10, preferably for example one or two layers of another adhesive (not shown in the drawings) are coated on the inner peripheral face 13. Such adhesive coating is preferably performed in an environment of 70% humidity or lower. The adhesive is not limited to any specific type, however a triazine thiol adhesive may be employed. Alternatively an adhesive such as a chlorinated rubber adhesive, a phenol resin adhesive, an isocyanate adhesive or a rubber halide adhesive may be employed.

Roughening treatment is preferably performed in advance to the face(s) to be coated with adhesive (the outer peripheral face 24A of the tire frame member 24 and the inner peripheral face 13 of the tread member 10) using a shot blast. This is in order for the adhesive to adhere more readily. It is further preferable to buff and then cleanse the faces that have been subjected to roughening treatment with for example alcohol to remove grease. It is also preferable to perform corona treatment or ultraviolet treatment to the faces that have been subjected to roughening treatment.

After disposing the adhesion member 26 on the outer peripheral face 24A of the tire frame member 24, in cases in which the tread member 10 is disposed at the tire radial direction outside of the adhesion member 26, it is preferable to coat for example an adhesive rubber cement composition (see rubber cement 242 illustrated in Fig. 9) to the inner peripheral face 13 side of the tread member 10 and/or the outer peripheral face side of the adhesion member 26. The tread member 10 is thereby temporarily held in a state affixed to the adhesion member 26, in order to improve operability characteristics.

A styrene-butadiene rubber (SBR) splice cement is preferably employed for the rubber cement composition when styrene-butadiene rubber (SBR) is used as the material of the tread member 10. A butadiene rubber (BR) compounded into a SBR splice cement is preferably employed when SBR rubber with a high natural rubber (NR) compounding ratio is used as the material of the tread member 10. Other rubber cement compositions that may be employed include solvent-free cement containing a liquid elastomer such as liquid BR, or cement with main components of a blend of isoprene rubber (IR) and SBR.

As shown in Fig. 2, when adhering the tread member 10 to the outer peripheral face 24A of the tire frame member 24, a temporary assembly 48 is configured by covering at least the ground contact face 12 side of the tread member 10 with an envelope 46 in a state in which the adhesion member 26 is disposed between the tire frame member 24 and the tread member 10. The envelope 46 is a covering member made from for example rubber, with airtight and elastic properties, appropriate thermal and chemical stability, and appropriate strength. A valve 50 is provided at the envelope 46 such that a region covered by the envelope 46 can be retained in a pressurized state or a vacuum state.

In the example shown in Fig. 2, the tire frame member 24 is assembled to a ring shaped support member 40 having a structure similar to that of a rim. The bead portions 36 make close contact with flange portions 40F of the support member 40. The envelope 46 covers the outside faces of both side portions 34 of the tire frame member 24 and the tread member 10, with a tire radial direction inside edge (not shown in the drawings) of the envelope 46 tucked in between the bead portions 36 and the flange portions 40F. A through hole 52 is provided at an inner peripheral face of the support member 40.

The inside of the envelope 46 of the temporary assembly 48 is pressurized to a specific pressure (for example 500kPa) through the valve 50. This pressure is lower than a pressure inside a container (not shown in the drawings) during vulcanization, described later, such that this difference in pressure presses the tread member 10 towards the tire frame member 24 side.

In the temporary assembly 48 state however, the envelope 46 may be made to tightly contact the tread member 10 and the tire frame member 24, pressing the tread member 10 towards the tire frame member 24 side, by creating a vacuum through the valve 50.

When the tire frame member 24 is sufficiently rigid not to deform when a vacuum is created inside the envelope 46, the tire frame member 24 may be covered by the envelope 46 as far as the inner face side, rather than only the tread member 10 and the outer face side of the tire frame member 24 being covered, without employing the support member 40.

The temporary assembly 48 is housed inside a specific container (not shown in the drawings). Vulcanization is performed by applying heat and pressure inside this container. The container is what is referred to as a vulcanizer, however the style thereof does not matter provided that the container has a sufficient volume to house the temporary assembly 48 and can withstand the heat and pressure applied during vulcanization. As an example, in Fig. 3, vulcanization conditions are a temperature of 120°C, a pressure p of 600kPa, and a duration of one hour. The pressure p acts on the tread member 10 from the envelope 46 side and also acts on the inner face side of the tire frame member 24 through the through hole 52 of the support member 40, as shown in Fig. 2. The interior of the temporary assembly 48 is pressurized at 500kPa, so the tread member 10 is accordingly pressed against the tire frame member 24 side by the difference of 100kPa.

Sulfur or peroxide may be employed as a vulcanization accelerator. Moreover carbon black or silica may be employed as a reinforcement agent in the adhesion member 26, with silica being preferable. Moreover, an aminosilane or polysulfide may be employed as a coupling agent.

A vulcanization temperature of 100°C or over and of less than 160°C is preferable when the resin material employed for the tire frame member 24 is a thermoplastic material. There is a possibility of the crown portion 32 that is reinforced by the cord 44 buckling due to thermal shrinkage of the thermoplastic material at 160°C and above. The degree of vulcanization of the adhesion member 26 may not be sufficient below 100°C.

By thus setting the temperature inside the container, setting the pressure inside the container to an appropriate pressure for vulcanization, and performing vulcanization for a specific duration, the adhesion member 26 is vulcanized and the tread member 10 is vulcanization adhered to the outer peripheral face 24A of the tire frame member 24, configuring the tire 30. When a semi-vulcanized tread member 10 is employed, the tread member 10 is also further vulcanized to reach the degree of vulcanization of the final product.

At this point, in the present exemplary embodiment the bottom portions 16A of the lateral main grooves 16 of the tread member 10 are formed with the air holes 18 penetrating through to the opposite side from the ground contact face 12 (the inner peripheral face 13). Air between the tread member 10 and the tire frame member 24 is accordingly expelled smoothly in the arrow A direction through the air holes 18 and into the lateral main grooves 16. More specifically, air between the tread member 10 and the tire frame member 24 is expelled through the air holes 18 to the inside of the air holes 18 as the process of vulcanizing and curing the adhesion member 26 progresses. Note that the air expulsion path is not limited to the air holes 18 and air is also expelled from between edge portions of the tread member 10 and the tire frame member 24 in the tire width direction.

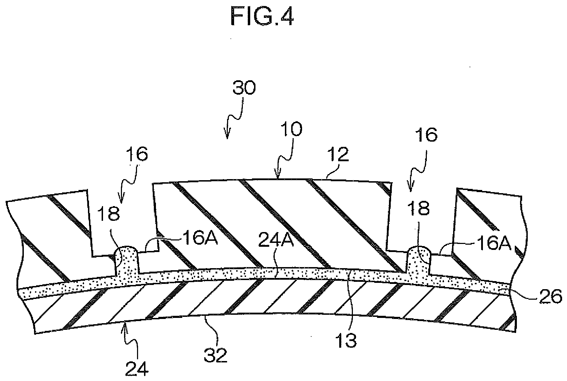

Moreover, the adhesion member 26 flows due to heating, and thereby enters the air holes 18 and hardens after the air between the tread member 10 and the tire frame member 24 has been expelled inside of the air holes 18. As shown in Fig. 4, the air holes 18 accordingly achieve a state blocked by the adhesion member 26.

The tire manufacturing method of the present exemplary embodiment is particularly effective when the gauge G of the bottom portions 16A of the lateral main grooves 16 is made thin in order reduce the volume of the tread member 10. The adhesiveness between the tread member 10 and the tire frame member 24 can accordingly be increased whilst the volume of the tread member 10 is reduced and rolling resistance lowered.

### Tire

The tire 30 according to the present exemplary embodiment illustrated in Fig. 2 includes: the tire frame member 24 formed from a resin material; the tread member 10 that is formed on the ground contact face 12 side with the circumferential direction main grooves 14 and the lateral main grooves 16 as examples of grooves, formed with the air holes 18 at the bottom portions 16A of the lateral main grooves 16, and disposed at the tire radial direction outside of the tire frame member 24; and the adhesion member 26 that is disposed between the outer peripheral face 24A of the tire frame member 24 and the tread member 10, that adheres the tread member 10 and the tire frame member 24, and that blocks off the tread air holes 18.

In the tire 30, the tread member 10 formed with the air holes 18 in the bottom portions 16A of the lateral main grooves 16 is adhered to the outer peripheral face 24A of the tire frame member 24 by the adhesion member 26, and the air holes 18 are blocked off by the adhesion member 26. Accordingly, air does not remain between the tread member 10 and the tire frame member 24 at the positions of the bottom portions 16A of the lateral main grooves 16. This is the case even when the tread member 10 has a small volume and the gauge G (Fig. 3) of the bottom portions 16A the lateral main grooves 16 is thin. The adhesiveness between the tread member 10 and the tire frame member 24 can accordingly be increased whilst the volume of the tread member 10 is reduced and rolling resistance lowered.

Note that in the exemplary embodiment described above, the tread member 10 is configured employing rubber, however the material for the tread member 10 is not limited to rubber, and another material with equivalent characteristics to rubber may be employed.

A thermoplastic material has been given as an example of the resin material employed in the tire frame member 24, however there is no limitation thereto, and for example a thermoset material may be employed.

Moreover, the tire 30 of the exemplary embodiment described above is a tubeless type tire employing the tire frame member 24 provided with the bead cores 38, however the configuration of the tire 30 is not limited thereto. Although not shown in the drawings, the tire frame member 24 employing a resin material may employ a hollow tube body formed in a tire circumferential direction circular ring shape and disposed at an outer peripheral portion of a rim.

### Second Exemplary Embodiment

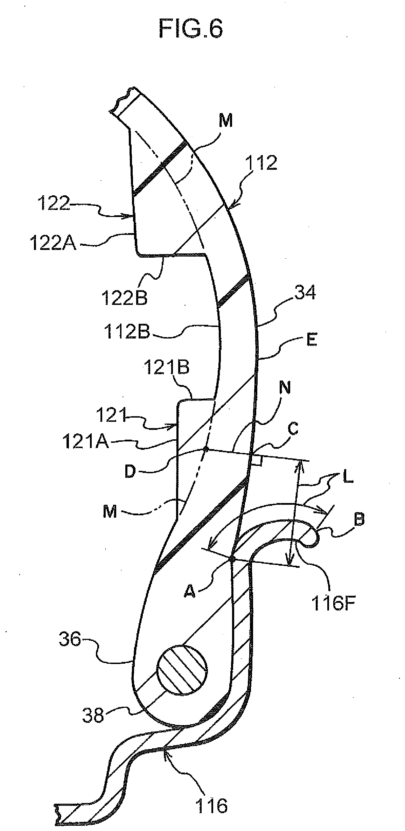

A tire 200 of the present exemplary embodiment illustrated in Fig. 6 includes a tire frame member 112, a tread member 10, first reinforcement portions 121 and second reinforcement portions 122.

### Tire Frame Member

The tire frame member 112 is formed using a thermoplastic material as an example of a resin material, and is formed so as to include: a pair of bead portions 36 configuring fitting portions to a rim 116; side portions 34 that respectively continue from the bead portions 36; and a crown portion 32 that connects together tire radial direction outside edges of the side portions 34 along the tire width direction.

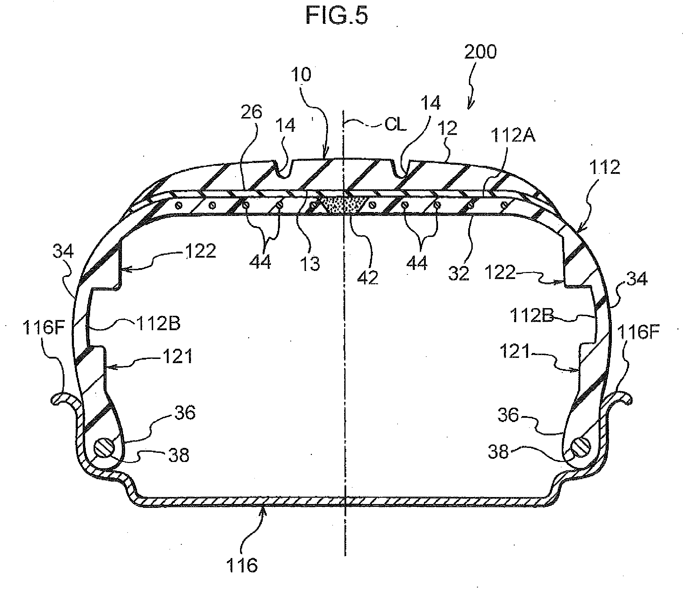

First Reinforcement Portions and Second Reinforcement Portions The first reinforcement portions 121 illustrated in Fig. 5 and Fig. 6 are provided at inner faces 112B of the tire frame member 112, and are disposed so as to include the inner face 112B side at positions that contact tire width direction outermost portions B of rim flanges 116F when the side portions 34 have been deformed so as to tilt towards the tire width direction outside along the rim flanges 116F of the rim 116, in a fitted state of the bead portions 36 to the rims 116. The first reinforcement portions 121 are for example formed continuously around the tire circumferential direction as projection shaped thickened wall portions.

As shown in Fig. 6, as viewed in a cross-section taken along the tire axial direction, in a state in which the tire 200 is assembled to the rim 116 and applied with a standard internal pressure, a position where the tire frame member 112 contacts the tire width direction outermost portion B of the rim flange 116F is a point C that is a length L from a rim divergence point A where the rim 116 diverges from the tire 10 around the outer face of the tire frame member 112, wherein L is the length of the profile from the rim divergence point A to the tire width direction outermost portion B of the rim flange 116F.

The first reinforcement portion 121 is disposed so as to include an intersection point D between the inner face 112B side of the point C, namely a normal line N to the point C on the outer face of the tire frame member 112, and a profile M of the inner face 112B. The first reinforcement portion 121 is moreover disposed further to the tire radial direction inside than a maximum width position E of the tire frame member 112. As shown in the cross-section of Fig. 6, the first reinforcement portion 121 has a vertical face 121A along the tire radial direction, and a horizontal face 121B along the tire width direction, forming for example a shape with a triangular cross-section.

Note that the rim 116 is for example a standard rim of an applicable size as defined by the 2010 YEAR BOOK published by JATMA, and "standard internal pressure" likewise refers to air pressure corresponding to a maximum load for an applicable size and ply rating as defined in the 2010 YEAR BOOK published by JATMA.

Where TRA standards or ETRTO standards are applicable at the location of use or the location of manufacture these respective standards are adhered to.

The second reinforcement portion 122 is provided at the inner face 112B of the tire frame member 112 and disposed so as to include positions at the tire radial direction outside of the first reinforcement portion 121. The second reinforcement portions 122 are for example formed continuously around the tire circumferential direction as projection shaped thickened portions. As shown in the cross-section of Fig. 6, the second reinforcement 122 has a vertical face 122A along the tire radial direction, and a horizontal face 122B along the tire width direction, forming for example a shape with a triangular cross-section. Moreover, the second reinforcement portion 122 is disposed with a separation from the first reinforcement portion 121, and at the tire radial direction outside of the maximum width position of the tire frame member 112.

"The second reinforcement portion 122 is disposed so as to include positions at the tire radial direction outside of the first reinforcement portion 121" means that at least a portion of the horizontal face 122B of the second reinforcement portion 122 overlaps 121 in the tire radial direction with the horizontal face 121B of the first reinforcement portion.

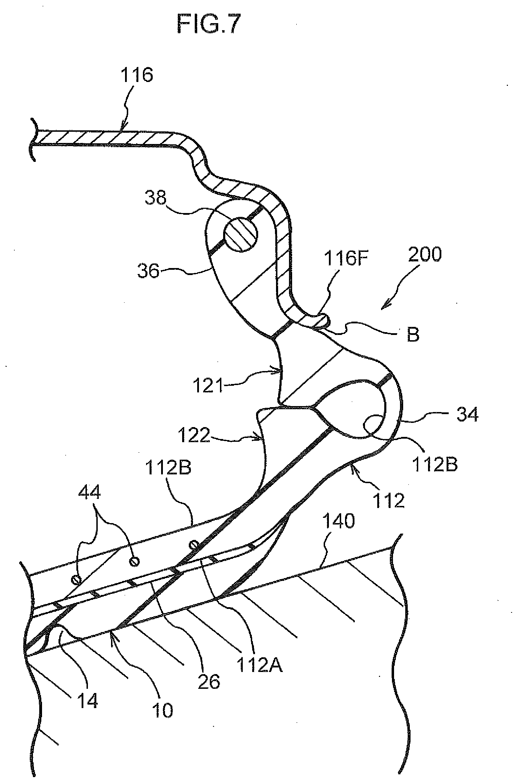

It is desirable for the first reinforcement portion 121 and the second reinforcement portion 122 to be of a size that provides a certain degree of width, in consideration of variations in the position and direction of contact with a protruding object 40 when the tire 10 rides over the protruding object 40 (see Fig. 7).

Method of Disposing the First Reinforcement Portions and the Second tire frame member 112, wherein L is the length of the profile from the rim divergence point A to the tire width direction outermost portion B of the rim flange 116F.

The first reinforcement portion 121 is disposed so as to include an intersection point D between the inner face 112B side of the point C, namely a normal line N to the point C on the outer face of the tire frame member 112, and a profile M of the inner face 112B. The first reinforcement portion 121 is moreover disposed further to the tire radial direction inside than a maximum width position E of the tire frame member 112. As shown in the cross-section of Fig. 6, the first reinforcement portion 121 has a vertical face 121A along the tire radial direction, and a horizontal face 121B along the tire width direction, forming for example a shape with a triangular cross-section.

Note that the rim 116 is for example a standard rim of an applicable size as defined by the 2010 YEAR BOOK published by JATMA, and "standard internal pressure" likewise refers to air pressure corresponding to a maximum load for an applicable size and ply rating as defined in the 2010 YEAR BOOK published by JATMA.

Where TRA standards or ETRTO standards are applicable at the location of use or the location of manufacture these respective standards are adhered to.

The second reinforcement portion 122 is provided at the inner face 112B of the tire frame member 112 and disposed so as to include positions at the tire radial direction outside of the first reinforcement portion 121. The second reinforcement portions 122 are for example formed continuously around the tire circumferential direction as projection shaped thickened portions. As shown in the cross-section of Fig. 6, the second reinforcement 122 has a vertical face 122A along the tire radial direction, and a horizontal face 122B along the tire width direction, forming for example a shape with a triangular cross-section. Moreover, the second reinforcement portion 122 is disposed with a separation from the first reinforcement portion 121, and at the tire radial direction outside of the maximum width position of the tire frame member 112.

"The second reinforcement portion 122 is disposed so as to include positions at the tire radial direction outside of the first reinforcement portion 121" means that at least a portion of the horizontal face 122B of the second reinforcement portion 122 overlaps 121 in the tire radial direction with the horizontal face 121B of the first reinforcement portion.

It is desirable for the first reinforcement portion 121 and the second reinforcement portion 122 to be of a size that provides a certain degree of width, in consideration of variations in the position and direction of contact with a protruding object 140 when the tire 200 rides over the protruding object 140 (see Fig. 7).

Method of Disposing the First Reinforcement Portions and the Second reinforcement portion 121 and/or the second reinforcement portion 122 according to the specifications of the tire 200. An increase in the types of mold employed in molding the tire frame member 112 can accordingly be suppressed, and manufacturing costs can be suppressed.

The first method to the fourth method above may each be employed individually, or an appropriate combination thereof may be employed. For example, the first reinforcement portion 121 may be integrally molded to the tire frame member 112 using the first method, and the second reinforcement portion 122 may be adhered to the tire frame member 112 using the third method.

Other portions are similar to those of the first exemplary embodiment, so similar portions are allocated the same reference numerals in the drawings, and explanation thereof is omitted.

### Operation

Explanation follows regarding operation of the present exemplary embodiment configured as described above. In the tire 200 according to the present exemplary embodiment illustrated in Fig. 7, even when the side portion 34 of the tire frame member 112 formed from a resin material attempts to deform heavily when riding over the protruding object 140 on the road surface, the first reinforcement portion 121 and the second reinforcement portion 122 mutually support each other between the protruding object 140 and the tire width direction outermost portion B of the rim flange 116F. Excessive deformation of the side portion 34 is thereby suppressed. Pinch cuts accompanying excessive deformation of the side portion 34 when riding over the protruding object 140 on the road surface can accordingly be suppressed without the side portion 34 having a uniformly thick gauge.

In the present exemplary embodiment, the first reinforcement portion 121 is disposed further to the tire radial direction inside than the maximum width position E of the of the tire frame member 112, and the second reinforcement portion 122 is disposed at a separation from the first reinforcement portion and to the tire radial direction outside of the maximum width position E. The resilience of the side portion 34 is accordingly secured and contact between the first reinforcement portion 121 and the second reinforcement portion 122 is suppressed during normal running. Good ride comfort can accordingly be secured.

Moreover, by providing the first reinforcement portion 121 and the second reinforcement portion 122 and raising the anti-pinch cut characteristics with respect to the protruding object 140 on the road surface, the gauge of the side portion 34 can accordingly be set thinner. The weight and volume of the tire can accordingly be reduced, rolling resistance can be decreased, and rigidity of the side portion can be suppressed, enabling ride comfort to be increased.

In the present exemplary embodiment, the first reinforcement portion 121 and the second reinforcement portion 122 are disposed at the inner face 112B of the tire frame member 112, thereby giving good rim assembly characteristics. It is difficult to provide locations such as the first reinforcement portion 121 and the second reinforcement portion 122 to inner faces in a general rubber tire that is vulcanize molded employing a bladder (not shown in the drawings). However as in the present exemplary embodiment, the first reinforcement portion 121 and the second reinforcement portion 122 can be comparatively easily provided at the inner face 112B when employing a resin material for the tire frame member 112.

Note that in the exemplary embodiment described above, the first reinforcement portion 121 and the second reinforcement portion 122 are disposed continuously around the tire circumferential direction, however there is no limitation thereto, and the first reinforcement portion 121 and the second reinforcement portion 122 may be provided intermittently around the tire circumferential direction. Moreover, although the shapes of the first reinforcement portion 121 and the second reinforcement portion 122 in tire axial direction cross-sections are respectively substantially triangular shapes, there is no limitation thereto. Configuration may be made with any shapes that are capable of mutually supporting each other such that the side portion 34 does not fold up on itself, with the inner face 112B of the tire frame member 112 directly contacting itself when the tire 200 rides over the protruding object 140 on the road surface. Namely, any shapes are acceptable provided that they are respectively raised on the tire inside with respect to the profile M of the inner face 112B of the tire frame member 112.

### Third Exemplary Embodiment

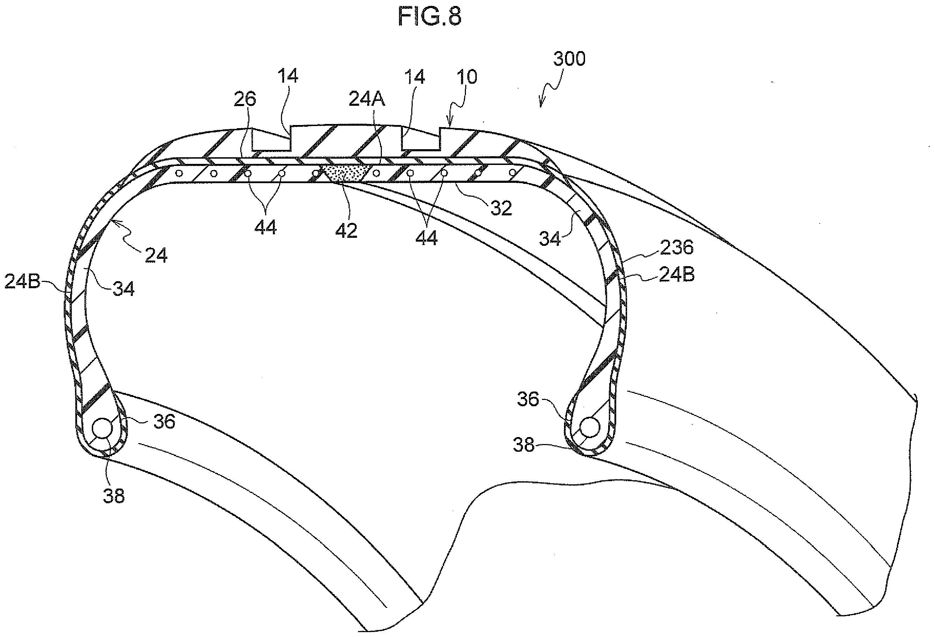

A tire 300 according to the present exemplary embodiment and illustrated in Fig. 8 to Fig. 12 is formed employing a resin material, and is provided with a tire frame member 24 spanning in a toroidal shape from a first bead portion 36 to a second bead portion 36. A tread member 10 is disposed to an outer peripheral face 24A of the tire frame member 24, and side covering layers 236 are disposed at outside faces 24B of the tire frame member 24.

### Side Covering Layer

The side covering layer 236 of the present exemplary embodiment employs a rubber that is similar to a rubber employed in side walls and bead portions of general related rubber pneumatic tires.

The side covering layers 236 of the present exemplary embodiment respectively extend continuously from an edge portion of the tread member 10 through an outer face of a side portion 34, an outer face of the bead portion 36, and an inside edge of the bead portion 36, to an inner face of the bead portion 36.

In the present exemplary embodiment, the thickness of an adhesion member 26 is set substantially the same as the thickness of the side covering layer 236. A taper shaped edge portion of the side covering layer 236 and a taper shaped edge portion of the adhesion member 26 are further joined together such that the side covering layer 236 and the adhesion member 26 are contiguous to each other.

The tire 300 of the present exemplary embodiment is accordingly completely covered with vulcanized rubber over the entire outer face of the tire frame member 24.

Other portions are similar to those of the first exemplary embodiment, so similar portions are accordingly allocated the same reference numerals in the drawings, and explanation thereof is omitted.

### Pneumatic Tire Manufacturing Method

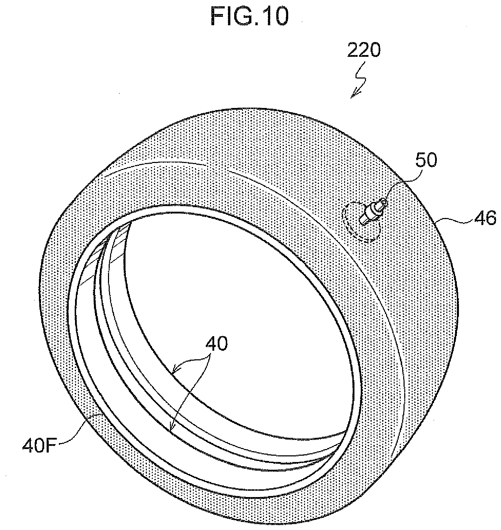

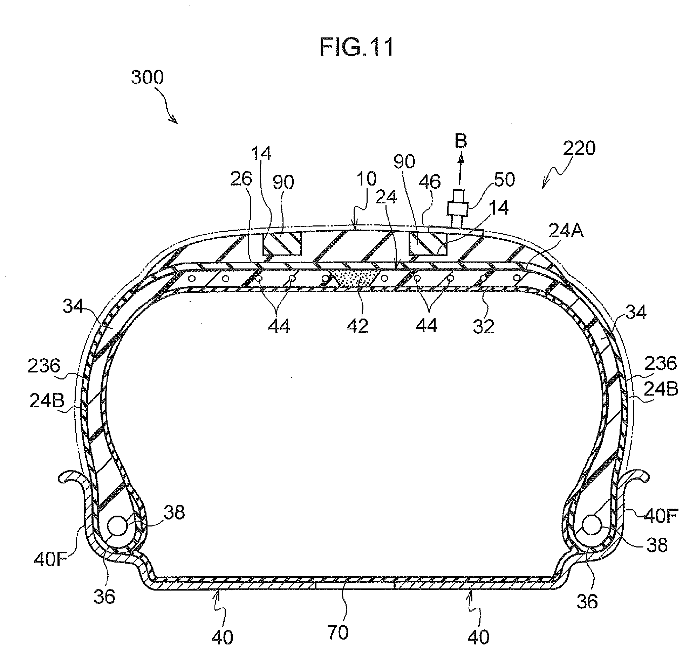

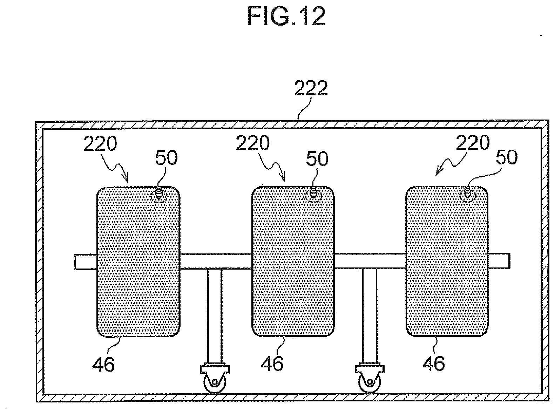

Explanation follows regarding a manufacturing method of the tire 300 of the present exemplary embodiment.
(1) Firstly, the tire frame member 24 configured from a resin material, the vulcanized or semi-vulcanized state tread member 10, and the vulcanized or semi-vulcanized state side covering layers 236 are pre-molded.
   Note that the side covering layers 236 are preferably formed with shapes that conform to the tire frame member 24 adhesion locations.
(2) As shown in Fig. 9, similarly to in the first exemplary embodiment, the adhesion member 26 that is an example of unvulcanized rubber is disposed to the outer peripheral face 24A of the tire frame member 24, and the vulcanized or semi-vulcanized state tread member 10 is disposed at the tire radial direction outside of the adhesion member 26. Note that when disposing the tread member 10 at the outer periphery of the adhesion member 26, for example a belt shaped tread member 10 may be wound onto the outer periphery of the adhesion member 26 in a circular ring shape, or a tread member 10 pre-formed in a circular ring shape may be employed.
   It is preferable to coat the outer peripheral face 24A with for example one layer or two layers of an adhesive 240 when disposing the unvulcanized adhesion member 26 on the outer peripheral face 24A of the tire frame member 24, It is also preferable to coat the back face side of the tread member 10 and/or the outer peripheral face side of the adhesion member 26 with an adhesive member such as a rubber cement composition 242 when disposing the vulcanized or semi-vulcanized state tread member 10 at the tire radial direction outside of the adhesion member 26.
(3) Next, the vulcanized or semi-vulcanized state side covering layers 236 are disposed to the outside faces 24B of the tire frame member 24.
   When disposing the side covering layers 236 to the outside faces 24B of the tire frame member 24, the adhesive 240 or the rubber cement composition 242 is coated on the outside faces 24B. Prior to coating the adhesive 240 or the rubber cement composition 242 on the outside faces 24B, the outside faces 24B may be buffed with for example sandpaper or a grinder, and the outside faces 24B may be cleansed using for example alcohol to remove grease after buffing. Moreover, corona treatment or ultraviolet irradiation treatment may be performed on the outside faces 24B after buffing. Note that the outer faces of the side covering layers 236 are formed with an indication of for example the manufacturer, the product name, and the tire size (not shown in the drawings).
(4) As shown in Fig. 10 and Fig. 11, the entire outer face of the tire frame member 24 on which the tread member 10 and the side covering layers 236 are disposed is covered by an envelope 46, and then assembled to a pair of ring shaped support members 40 that have a rim-like structure. Note that tire radial direction inside edges (not shown in the drawings) of the envelope 46 are tucked in between the bead portions 36 and flange portions 40F. Pressing members 90 formed from a resilient body such as rubber are temporarily disposed in grooves 14 so as to fill the grooves 14 (the pressing members 90 are removed after vulcanization).
   The envelope 46 is a covering member made from for example rubber, with airtight and elastic properties, appropriate thermal and chemical stability, and an appropriate strength. A valve 50 is provided at the envelope 46 such that the tread member 10 and the side covering layers 236 are pressed towards the tire frame member 24 side when a vacuum is created in the arrow B direction within a region covered by the envelope 46. It is desirable for the valve 50 to include a valve mechanism (not shown in the drawings) to prevent air from flowing into the envelope 46 from outside after a vacuum has been created.
   As shown in Fig. 11, an expandable and contractible ring shaped bladder 70 is disposed at the inner face side of the tire frame member 24. By inflating the bladder 70, the inner face side of the tire frame member 24 can be pressed by the outer face of the bladder 70. The vicinity of tire radial direction inside edge portions of the side covering layers 236 can accordingly be pressed against the inner faces of the bead portions 36, and the shape of the tire frame member 24 can be maintained. Note that a valve, not shown in the drawings, is provided at the bladder 70 to allow air in and out of an internal portion of the bladder 70. The tire frame member 24 to which the tread member 10 and the side covering layers 236 have been disposed is thus covered by the envelope 46, to configure a temporary assembly 220 with the bladder 70 is disposed at the inside and the tire frame member 24 assembled to the support members 40.
(5) Then, as shown in Fig. 12, the temporary assembly 220 is housed in a container 222, and vulcanization is performed by applying heat and applying pressure inside the container 222. The container 222 is what is referred to as a vulcanizer, however the style thereof does not matter provided that it is a container with sufficient volume to house the temporary assembly 220 and can withstand the heat and pressure applied during vulcanization.
   Note that since the tire frame member 24 is configured from a thermoplastic resin, the temperature during vulcanization is set below the melting point of the thermoplastic resin such that the tire frame member 24 does not melt or soften and deform.
   The vulcanization duration is obviously set at the required duration for complete vulcanization of the adhesion member 26. Moreover, when the tread member 10 and the side covering layers 236 are semi-vulcanized components, the vulcanization duration is obviously set at the required duration for complete vulcanization of the tread member 10 and the side covering layers 236. The vulcanization duration and the vulcanization temperature are set at appropriate optimal values according to the rubber employed.

In the present exemplary embodiment, prior to vulcanization the only unvulcanized rubber present is the thin sheet shaped adhesion member 26, with other rubber, namely the tread member 10 and the side covering layers 236 being semi-vulcanized or fully vulcanized. The vulcanization duration can accordingly be greatly shortened in comparison to cases in which the tread member 10 and the side covering layers 236 are also configured from unvulcanized rubber.

Specifically, when a thermoplastic resin is employed for members configuring a tire as in the tire 300 of the present exemplary embodiment, this results in a limitation that in order not to deform the thermoplastic resin formed members (the tire frame member 24), the vulcanization temperature cannot be raised satisfactorily (compared to the vulcanization temperature in related rubber pneumatic tires that do not employ thermoplastic resin). Accordingly, the vulcanization duration has to be extended in order to fully vulcanize the rubber (in comparison to the vulcanization duration in related rubber pneumatic tires that do not employ thermoplastic resin).

In the tire 300 of the present exemplary embodiment, the tread member 10 and the side covering layers 236 are semi-vulcanized or fully vulcanized, and the only unvulcanized rubber is in the thin sheet shaped adhesion member 26. Accordingly, as explained above, the vulcanization duration can be greatly shortened in comparison to cases in which the tread member 10 and the side covering layers 236 are also configured from unvulcanized rubber, enabling any detriment to the cycle time to be suppressed.

In the tire 300 of the present exemplary embodiment, the outside faces of the thermoplastic resin formed tire frame member 24 are covered by the side covering layers 236. The resistance to external damage of outside portions of the tire caused by for example curb contact, as well as weather resistance to for example sunlight and water can be greatly increased in comparison to cases in which thermoplastic resin is exposed at outside portions of the tire.
Moreover, the side covering layers 236 cover rim contact portions, namely the outer faces and inner edge portions of the bead portions 36. Good sealing characteristics similar to those of related rubber pneumatic tires can accordingly be achieved between the rim and the bead portions 36.

In the present exemplary embodiment, the tire 300 can accordingly be manufactured by joining the tread member 10 and the side covering layers 236 to the tire frame member 24 that employs a thermoplastic resin, without using a vulcanization mold requiring large-scale vulcanization equipment. A reduction in manufacturing costs can accordingly be achieved for the tire 300 employing thermoplastic resin for the tire frame member 24.

Pressure need not necessarily be applied in the container 222, and it is possible to perform vulcanization by application of heat alone. However, adhesion of the tread member 10 to the tire frame member 24 can be increased by applying pressure inside the container 222.

### Other Exemplary Embodiments

Note that in the above exemplary embodiment, only the adhesive 240 or the rubber cement composition 242 are interposed between the side covering layers 236 and the tire frame member 24. However a thin sheet shaped unvulcanized rubber sheet similar to the adhesion member 26 between the tread member 10 and the tire frame member 24 may be interposed therebetween.

In the above exemplary embodiment, the tread member 10 and the side covering layers 236 that are adhered to the tire frame member 24 are formed as separate bodies, however the tread member 10 and the side covering layers 236 may be integrally formed.

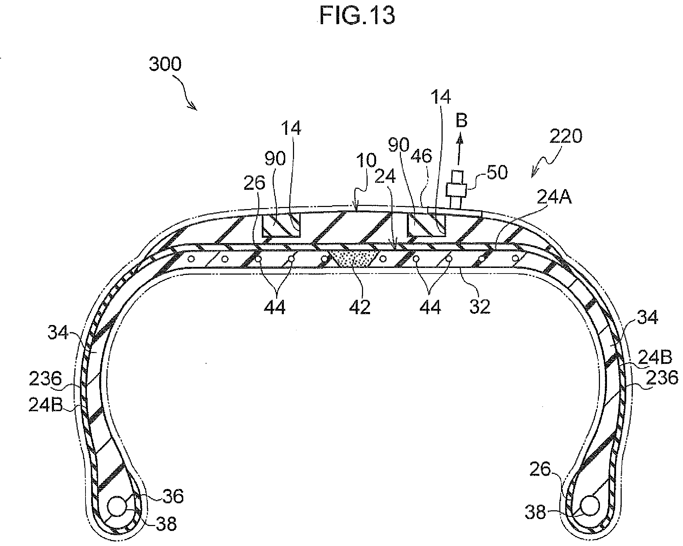

In the above exemplary embodiment, vulcanization is performed employing the support members 40 and the bladder 70, however as shown in Fig. 13, the envelope 46 may cover as far as the inner face side of the tire frame member 24 rather than only the outer face sides of the tread member 10, the side covering layers 236 and the tire frame member 24, without employing the support members 40 and the bladder 70.

Note that the manner in which the tread member 10, the side covering layers 236 and the tire frame member 24 are covered by the envelope 46 is not limited to the configuration of the present exemplary embodiment and the illustrated examples. The sequence of processes in the tire manufacturing method according to the present exemplary embodiment may also be varied as appropriate.

In the above exemplary embodiment, edge portions of the side covering layers 236 curl around to the inner faces of the bead portions 36. However provided that there are no issues with the rim sealing characteristics, and provided that at least the outside face of the tire frame member 24 is not exposed in a rim-assembled state, the side covering layers 236 may extend from the tread edge to a contact position with a flange portion of the rim.

In the above exemplary embodiment, the material for the side covering layers 236 is vulcanized rubber, however a resin material may be employed depending on circumstances. When the material for the side covering layers 236 is a resin material, it is necessary to employ a different resin material to the thermoplastic resin configuring the tire frame member 24, and necessary to employ a resin material having superior resistance to external damage and weather resistance to the thermoplastic resin configuring the tire frame member 24.

In the above exemplary embodiment, the material for the side covering layers 236 is vulcanized rubber only, however depending on circumstances, for example a reinforcement layer of cord layers configured from for example inorganic fibers or organic fibers, or fiber layers of for example non-woven fabric or woven material may be embedded in order to improve resistance to external damage. The crack progression, for example, can accordingly be suppressed.
Note that a reinforcement layer of cord layers configured from for example inorganic fibers, organic fibers or fiber layers of for example non-woven fabric or woven material may be adhered to the outside faces of the tire frame member 24, and the side covering layers 236 adhered over the top thereof.

In the above exemplary embodiment, the material of the side covering layers 236 is only a single type of vulcanized rubber, however depending on circumstances, configurations of two or more layers of different types of rubber are possible.

In the above exemplary embodiment, the material for the tread member 10 is vulcanized rubber, however a resin material may be employed depending on circumstances. When the material for the tread member 10 is a resin material, it is preferable to employ a resin material that is a different resin material to the thermoplastic resin configuring the tire frame member 24 and that is a resin material with superior abrasion resistance characteristics to the thermoplastic resin configuring the tire frame member 24.

In the above exemplary embodiment, the tread member 10 configured from a different material to the tire frame member 24 is provided at the outer peripheral face of the tire frame member 24, however depending on circumstances, the crown portion 32 of the tire frame member 24 may be formed thicker and employed in place of the tread member 10.

Note that the side covering layers 236 and the tire frame member 24 are preferably set of equivalent hardness such that the side covering layers 236 and the tire frame member 24 do not come apart due to buckling deformation of the tire 300 during running.

The features of each of the above exemplary embodiments may be combined as appropriate.

### Explanation of the Reference Numerals

### Explanation of the Reference Numerals

- 10: tread member
- 12: ground contact face
- 14: circumferential direction main groove (groove)
- 16: lateral main groove (groove)
- 16A: bottom portion
- 18: air hole
- 24: tire frame member
- 24A: outer peripheral face
- 26: adhesion member
- 30: tire
- 34: side portion (outside portion)
- 36: bead portion (outside portion)
- 112: tire frame member
- 112B: inner face
- 116: rim
- 116F: rim flange
- 121: first reinforcement portion
- 122: second reinforcement portion
- 200: tire
- 236: side covering layer (covering layer)
- 300: tire
- B: tire width direction outermost portion B
- C: point
- E: maximum width position E

## Claims

1. A tire manufacturing method comprising:
forming a tire frame member (24, 112) using a resin material;
disposing a tread member (10) at a tire radial direction outside of the tire frame member (24, 112), the tread member (10) formed with a groove (16) on a ground contact face side of the tread member (10) and with a plurality of air holes (18) formed at a bottom portion (16A) of the groove (16), arranged in a tire width direction and penetrating through to the opposite side of the tread member (10) from the ground contact face (12); and
disposing an adhesion member (26) between an outer peripheral face of the tire frame member (24, 112) and the tread member (10), and adhering the tread member (10) to the tire frame member (24, 112), thereby the adhesion member enters and hardens in the air holes (18) and blocks off the air holes (18).

2. The tire manufacturing method of claim 1, wherein the air holes (18) are formed during molding of the tread member (10).

3. The tire manufacturing method of either claim 1 or claim 2, wherein the air holes (18) are bored after the tread member (10) has been molded and before adhering the tread member (10) to the tire frame member (24, 112).

4. A tire manufacturing method of claim 1, wherein the adhesion member (26) fills up and hardens in the air holes (18) and completely blocks off the air holes (18).

5. A tire (30, 200, 300) comprising:
a tire frame member (24, 112) formed using a resin material;
a tread member (10) that is disposed at a tire radial direction outside of the tire frame member (24, 112) and that is formed with a groove (16) on a ground contact face side and with a plurality of air holes (18) formed at a bottom portion (16A) of the groove (16) and arranged in a tire width direction; and
an adhesion member (26) that is disposed between an outer peripheral face of the tire frame member (24, 112) and the tread member (10), that adheres the tread member (10) and the tire frame member (24, 112) together, and that blocks off the air holes (18) of the tread member (10).

6. The tire (200) of claim 5, wherein:
the tire frame member (112) includes at both tire width direction sides a bead portion (36) that configures a fitting portion to a rim (116), and a side portion (34) that is contiguous to the bead portion (36);
a first reinforcement portion (121) is provided at an inner face (112B) of the tire frame member (112), the first reinforcement portion (121) being disposed in a fitted state of the bead portion (36) to the rim (116) so as to include an inner face side of a position that contacts a tire width direction outermost portion of a rim flange (116F) of the rim (116) when the side portion (34) is deformed along the rim flange (116F) so as to tilt towards a tire width direction outside; and
a second reinforcement portion (122) is provided at the inner face (112B) of the tire frame member (112), the second reinforcement portion (122) being disposed so as to include a position at the tire radial direction outside of the first reinforcement portion (121).

7. The tire (200) of claim 6, wherein:
the first reinforcement portion (121) is disposed to the tire radial direction inside of a maximum width position (E) of the tire frame member (112); and
the second reinforcement portion (122) is disposed to the tire radial direction outside of the maximum width position (E) and at a separation from the first reinforcement portion (121).

8. The tire (200) of either claim 6 or claim 7, wherein the first reinforcement portion (121) and/or the second reinforcement portion (122) are/is integrally molded to the tire frame member (112).

9. The tire (200) of either claim 6 or claim 7, wherein the first reinforcement portion (121) and/or the second reinforcement portion (122) are/is adhered to the inner face (112B) of the tire frame member (112).

10. The tire (300) of claim 5, wherein:
the tire frame member (24) is formed in a toroidal shape so as to span between a pair of bead portions (36); and
the tire further comprises a covering layer (236) provided so as to cover an outside portion of the tire frame member (24).

11. The tire (300) of claim 10, wherein the covering layer (236) is configured from vulcanized rubber.

12. The tire (300) of claim 11, comprising a tread layer made from vulcanized rubber and provided at an outer peripheral face of the tire frame member (24).

13. The tire (300) of claim 12, wherein the tread layer and the covering layer (236) are integrally formed to each other.

14. The tire (300) of any one of claim 11 to claim 13, wherein the covering layer (236) extends continuously from an outside face to an inside face of bead portions (36) of the tire frame member (24).

15. The tire (300) of claim 12 or claim 13, wherein the tread layer and the covering layer (236) are configured from different types of rubber.

16. The tire (300) of any one of claim 10 to claim 15, wherein the covering layer (236) includes cord layers or fiber layers.

17. The tire (30, 200, 300) of claim 5, wherein the air holes (18) have a diameter of between 20% and 300% of a gauge (G) of the bottom portion (16A) of the groove (16).

18. A tire (30, 200, 300) of claim 5, wherein the adhesion member (26) fills up and completely blocks off the air holes (18) of the tread member (10).

## Patentansprüche

1. Reifenherstellungsverfahren umfassend:
Bilden eines Reifengerüstglieds (24, 112) durch Verwendung eines Harzmaterials;
Anordnen eines Laufflächenglieds (10) in einer Reifenradialrichtung außerhalb des Reifengerüstglieds (24, 112), wobei das Laufflächenglied (10) mit einer Rille (16) auf einer Bodenkontaktflächenseite des Laufflächenglieds (10) und einer Mehrzahl von Luftlöchern (18) gebildet ist, welche auf einem unteren Abschnitt (16A) der Rille (16) gebildet sind und in einer Reifenbreitenrichtung angeordnet sind und von der Bodenkontaktfläche (12) zur entgegengesetzten Seite des Laufflächenglieds (10) durchdringen; und
Anordnen eines Klebeglieds (26) zwischen einer äußeren Umfangsfläche des Reifengerüstglieds (24, 112) und dem Laufflächenglied (10), und Kleben des Laufflächenglieds (10) an das Reifengerüstglied (24, 112), wodurch das Klebeglied eindringt und in den Luftlöchern (18) aushärtet und die Luftlöcher (18) blockiert.

2. Reifenherstellungsverfahren nach Anspruch 1, wobei die Luftlöcher (18) während des Formens des Laufflächenglieds (10) gebildet werden.

3. Reifenherstellungsverfahren nach Anspruch 1 oder Anspruch 2, wobei die Luftlöcher (18) gebohrt werden nachdem das Laufflächenglied (10) geformt worden ist und bevor das Laufflächenglied (10) an das Reifengerüstglied (24, 112) geklebt wird.

4. Reifenherstellungsverfahren nach Anspruch 1, wobei das Klebeglied (26) die Luftlöcher (18) auffüllt und in denselben aushärtet und die Luftlöcher (18) vollkommen blockiert.

5. Reifen (30, 200, 300) umfassend:
ein Reifengerüstglied (24, 112), welches durch Verwendung eines Harzmaterials gebildet wird;
ein Laufflächenglied (10), welches in einer Reifenradialrichtung außerhalb des Reifengerüstglieds (24, 112) angeordnet ist und welches mit einer Rille (16) auf einer Bodenkontaktflächenseite und mit einer Mehrzahl von Luftlöchern (18) gebildet ist, welche auf einem unteren Abschnitt (16A) der Rille (16) gebildet sind und in einer Reifenbreitenrichtung angeordnet sind; und
ein Klebeglied (26), welches zwischen einer äußeren Umfangsfläche des Reifengerüstglieds (24, 112) und dem Laufflächenglied (10) angeordnet ist, welches das Laufflächenglied (10) und das Reifengerüstglied (24, 112) zusammenklebt, und welches die Luftlöcher (18) des Laufflächenglieds (10) blockiert.

6. Reifen (200) nach Anspruch 5, wobei:
das Reifengerüstglied (112) auf beiden Seiten in der Reifenbreitenrichtung einen Wulstabschnitt (36), welcher einen Montageabschnitt auf einer Felge (116) bildet, und einen Seitenabschnitt (34) umfasst, welcher an den Wulstabschnitt (36) angrenzt;
ein erster Verstärkungsabschnitt (121) auf einer Innenfläche (112B) des Reifengerüstglieds (112) bereitgestellt ist, wobei der erste Verstärkungsabschnitt (121) in einem montierten Zustand des Wulstabschnitts (36) auf der Felge (116) angeordnet ist, sodass er eine innere Flächenseite einer Stelle umfasst, welche einen äußersten Abschnitt, in der Reifenbreitenrichtung, eines Felgenflansches (116F) der Felge (116) kontaktiert, wenn der Seitenabschnitt (34) entlang des Felgenflansches (116F) so verformt wird, dass er nach außen in eine Reifenbreitenrichtung umkippt; und
ein zweiter Verstärkungsabschnitt (122) auf der Innenfläche (112B) des Reifengerüstglieds (112) bereitgestellt ist, wobei der zweite Verstärkungsabschnitt (122) so angeordnet ist, dass er einen Abschnitt in der Reifenradialrichtung außerhalb des ersten Verstärkungsabschnitts (121) umfasst.

7. Reifen (200) nach Anspruch 6, wobei:
der erste Verstärkungsabschnitt (121) in Reifenradialrichtung innerhalb einer Stelle (E) maximaler Breite des Reifengerüstglieds (112) angeordnet ist; und
der zweite Verstärkungsabschnitt (122) in Reifenradialrichtung außerhalb der Stelle (E) maximaler Breite und mit einem Abstand von dem ersten Verstärkungsabschnitt (121) angeordnet ist.

8. Reifen (200) nach Anspruch 6 oder 7, wobei der erste Verstärkungsabschnitt (121) und/oder der zweite Verstärkungsabschnitt (122) mit dem Reifengerüstglied (112) einstückig gebildet sind/ist.

9. Reifen (200) nach Anspruch 6 oder 7, wobei der erste Verstärkungsabschnitt (121) und/oder der zweite Verstärkungsabschnitt (122) auf der Innenfläche (112B) des Reifengerüstglieds (112) geklebt sind/ist.

10. Reifen (300) nach Anspruch 5, wobei:
das Reifengerüstglied (24) torusförmig gebildet ist, um sich zwischen ein Paar Wulstabschnitten (36) zu erstrecken; und
wobei der Reifen ferner eine Deckschicht (236) umfasst, welche so bereitgestellt ist, dass sie einen äußeren Abschnitt des Reifengerüstglieds (24) abdeckt.

11. Reifen (300) nach Anspruch 10, wobei die Deckschicht (236) aus vulkanisiertem Gummi konfiguriert ist.

12. Reifen (300) nach Anspruch 11, umfassend eine Laufflächenschicht, welche aus vulkanisiertem Gummi gebildet ist und auf einer äußeren Umfangsfläche des Reifengerüstglieds (24) bereitgestellt ist.

13. Reifen (300) nach Anspruch 12, wobei die Laufflächenschicht und die Deckschicht (236) einstückig miteinander geformt sind.

14. Reifen (300) nach einem der Ansprüche 11 bis 13, wobei die Deckschicht (236) sich kontinuierlich von einer Außenfläche zu einer Innenfläche der Wulstabschnitte (36) des Reifengerüstglieds (24) erstreckt.

15. Reifen (300) nach Anspruch 12 oder 13, wobei die Laufflächenschicht und die Deckschicht (236) aus unterschiedlichen Gummisorten konfiguriert sind.

16. Reifen (300) nach einem der Ansprüche 10 bis 15, wobei die Deckschicht (236) Kordschichten oder Faserschichten umfasst.

17. Reifen (30, 200, 300) nach Anspruch 5, wobei die Luftlöcher (18) einen Durchmesser zwischen 20% und 300% eines Maßes (G) des unteren Abschnitts (16A) der Rille (16) aufweisen.

18. Reifen (30, 200, 300) nach Anspruch 5, wobei das Klebeglied (26) die Luftlöcher (18) des Laufflächenglieds (10) vollkommen auffüllt und blockiert.

## Revendications

1. Procédé de confection d'un bandage pneumatique, comprenant les étapes ci-dessous :
formation d'un élément de cadre du bandage pneumatique (24, 112) en utilisant un matériau de résine ;
disposition d'un élément de bande de roulement (10) à l'extérieur, dans une direction radiale du bandage pneumatique, de l'élément de cadre du bandage pneumatique (24, 112), l'élément de bande de roulement (10) comportant une rainure (16) sur un côté de la face de contact au sol de l'élément de bande de roulement (10), et plusieurs trous d'air (18) formés au niveau d'une partie de fond (16A) de la rainure (16), agencés dans une direction de la largeur du bandage pneumatique et pénétrant à travers celle-ci vers le côté opposé de l'élément de bande de roulement (10) à partir de la face de contact au sol (12) ; et
disposition d'un élément d'adhésion (26) entre une face périphérique externe de l'élément de cadre du bandage pneumatique (24, 112) et l'élément de bande de roulement (10) et adhésion de l'élément de bande de roulement (10) sur l'élément de cadre du bandage pneumatique (24, 112), l'élément d'adhésion rentrant et étant durci dans les trous d'air (18), obstruant les trous d'air (18).

2. Procédé de confection d'un bandage pneumatique selon la revendication 1, dans lequel les trous d'air (18) sont formés au cours du moulage de l'élément de bande de roulement (10).

3. Procédé de confection d'un bandage pneumatique selon les revendications 1 ou 2, dans lequel les trous d'air (18) sont percés après le moulage de l'élément de bande de roulement (10) et avant l'adhésion de l'élément de bande de roulement (10) sur l'élément de cadre du bandage pneumatique (24, 112).

4. Procédé de confection d'un bandage pneumatique selon la revendication 1, dans lequel l'élément d'adhésion (26) remplit les trous d'air (18) et y est durci, obstruant complètement les trous d'air (18).

5. Bandage pneumatique (30, 200, 300), comprenant :
un élément de cadre du bandage pneumatique (24, 112) formé en utilisant un matériau de résine ;
un élément de bande de roulement (10) disposé à l'extérieur, dans la direction radiale du bandage pneumatique, de l'élément de cadre du bandage pneumatique (24, 112) et comportant une rainure (16) sur un côté de la face de contact au sol, et plusieurs trous d'air (16) formés au niveau d'une partie inférieure (16A) de la rainure (16) et agencés dans une direction de la largeur du bandage pneumatique ; et
un élément d'adhésion (26) disposé entre une face périphérique externe de l'élément de cadre du bandage pneumatique (24, 112) et l'élément de bande de roulement (10), assurant l'adhésion de l'élément de bande de roulement (10) et de l'élément de cadre du bandage pneumatique (24, 112), et obstruant les trous d'air (18) de l'élément de bande de roulement (10).

6. Bandage pneumatique (200) selon la revendication 5, dans lequel :
l'élément de cadre du bandage pneumatique (112) inclut, au niveau des deux côtés dans la direction de la largeur du bandage pneumatique, une partie de talon (36) configurant une partie d'ajustement sur une jante (116), et une partie de flanc (34) contiguë à la partie de talon (36) ;
une première partie de renforcement (121) est agencée au niveau d'une face interne (112B) de l'élément de cadre du bandage pneumatique (112), la première partie de renforcement (121) étant disposée, dans un état d'ajustement de la partie de talon (36) sur la jante (116), de sorte à inclure un côté de face interne d'une position contactant une partie externe extrême, dans une direction de la largeur du bandage pneumatique, d'un rebord de jante (116F) de la jante (116) lorsque la partie latérale (34) est déformée le long du rebord de jante (116F), de sorte à être inclinée vers un extérieur, dans la direction de la largeur du bandage pneumatique ; et
une deuxième partie de renforcement (122) est agencée au niveau de la face interne (112B) de l'élément de cadre du bandage pneumatique (112), la deuxième partie de renforcement (122) étant disposée de sorte à inclure une position au niveau de l'extérieur, dans la direction radiale du bandage pneumatique, de la première partie de renforcement (121).

7. Bandage pneumatique (200) selon la revendication 6, dans lequel :
la première partie de renforcement (121) est disposée vers l'intérieur, dans la direction radiale du bandage pneumatique, d'une position à largeur maximale (E) de l'élément de cadre du bandage pneumatique (112) ; et
la deuxième partie de renforcement (122) est disposée vers l'extérieur, dans la direction radiale du bandage pneumatique, de la position à largeur maximale (E) et à une distance de la première partie de renforcement (121).

8. Bandage pneumatique (200) selon les revendications 6 ou 7, dans lequel la première partie de renforcement (121) et/ou la deuxième partie de renforcement (122) est/sont moulée(s) d'une seule pièce sur l'élément de cadre du bandage pneumatique (112).

9. Bandage pneumatique (200) selon les revendications 6 ou 7, dans lequel la première partie de renforcement (121) et/ou la deuxième partie de renforcement (122) est/sont adhérée(s) sur la face interne (112B) de l'élément de cadre du bandage pneumatique (112).

10. Bandage pneumatique (300) selon la revendication 5, dans lequel :
l'élément de cadre du bandage pneumatique (24) est formé en une forme toroïdale de sorte à s'étendre entre une paire de parties de talon (36) ; et
le bandage pneumatique comprend en outre une couche de couverture (236) agencée de sorte à recouvrir une partie externe de l'élément de cadre du bandage pneumatique (24).

11. Bandage pneumatique (300) selon la revendication 10, dans lequel la couche de couverture (236) est configurée à partir de caoutchouc vulcanisé.

12. Bandage pneumatique (300) selon la revendication 11, comprenant une couche de bande de roulement formée à partir de caoutchouc vulcanisé et agencée au niveau d'une face périphérique externe de l'élément de cadre du bandage pneumatique (24).

13. Bandage pneumatique (300) selon la revendication 12, dans lequel la couche de bande de roulement et la couche de couverture (236) sont formées d'une seule pièce l'une avec l'autre.

14. Bandage pneumatique (300) selon l'une quelconque des revendications 11 à 13, dans lequel la couche de couverture (236) s'étend en continu d'une face extérieure vers une face intérieure des parties de talon (36) de l'élément de cadre du bandage pneumatique (24).

15. Bandage pneumatique (300) selon les revendications 12 ou 13, dans lequel la couche de bande de roulement et la couche de couverture (236) sont configurées à partir de différents types de caoutchouc.

16. Bandage pneumatique (300) selon l'une quelconque des revendications 10 à 15 dans lequel la couche de couverture (236) inclut des couches de câblés ou des couches de fibres.

17. Bandage neumatique (30, 200, 300) selon la revendication 5, dans lequel les trous d'air (18) ont un diamètre représentant entre 20% et 300% d'une épaisseur (G) de la partie de fond (16A) de la rainure (16).

18. Bandage pneumatique (30, 200, 300) selon la revendication 5, dans lequel l'élément d'adhésion (26) remplit et obstrue complètement les trous d'air (18) de l'élément de bande de roulement (10).
